# EUROPEAN PATENT SPECIFICATION

(11) **EP 2 657 262 B1**
(45) Date of publication and mention of the grant of the patent: **26.11.2014**
(21) Application number: 13164975.8
(22) Date of filing: 23.04.2013
(51) Int. Cl.: C08F 236/10, B60C 1/00, C08F 2/06

(54) **Triglyceride containing solution polymerization prepared styrene/butadiene elastomer and tire with component**
Triglycerid mit Lösungspolymerisierung aus Styrol/Butadien hergestelltem Elastomer und Reifen mit Komponente
Élastomères de styrène/butadiène préparés par polymérisation de solution contenant un triglycéride et pneu avec composant

(30) Priority: 26.04.2012 US 201213456819
(43) Date of publication of application: 30.10.2013
(73) Proprietor: The Goodyear Tire & Rubber Company, Akron, Ohio 44316 (US)
(72) Inventor: Kerns, Michael Lester, Medina, OH Ohio 44256 (US); Rodewald, Stephan, Canal Fulton, OH Ohio 44614 (US); Ramanathan, Ahalya, Stow, OH Ohio 44224 (US); Sandstrom, Paul Harry, Cuyahoga Falls, OH Ohio 44223 (US)
(74) Representative: Kutsch, Bernd

(56) References cited:
- EP-A1- 1 544 243
- EP-A1- 2 028 022
- WO-A1-2012/012133
- US-A1- 2005 148 713

## Description

### Field of the Invention

This invention relates to preparation of triglyceride extended organic solvent solution polymerization prepared styrene/butadiene elastomer, particularly a high molecular weight (high Mooney viscosity) uncured styrene/butadiene elastomer, the resulting composite, rubber composition containing such composite and tire with component containing such rubber composition. Representative of such triglycerides are vegetable oils such as, for example, soybean oil, sunflower oil, rapeseed oil and canola oil.

### Background of the Invention

Significantly high molecular weight uncured elastomers (e.g. uncured elastomers of significantly high viscosity) are sometimes desired to prepare rubber compositions to achieve desired physical properties for cured rubber compositions, particularly for various vehicular tire components such as, for tire treads.

It is the organic solution polymerization prepared styrene/butadiene elastomers (SSBRs) that can achieve a desired high molecular weight (high Mooney viscosity) usually considered necessary to promote exceptional physical properties for the cured elastomer, particularly for use for various tire components, particularly tire treads.

However, accompanying the desired high molecular weight of the SSBRs is the significant increase in difficulty in processing the uncured elastomers both at the elastomer production facility, particularly for the finishing of the elastomer, and, also for the preparation of rubber compositions for use as, for example, various components of a tire because of the high Mooney viscosity of the uncured elastomer.

Therefore, such relatively high viscosity SSBRs are sometimes petroleum oil extended at the SSBR manufacturing facility to thereby reduce their viscosity and promote better elastomer processing at the SSBR manufacturing facility. Such SSBRs are often referred to as being oil extended SSBRs, namely petroleum oil extended. Exemplary of such petroleum based rubber processing oils are, for example, aromatic, naphthenic and paraffinic based oils, particularly their mixtures.

Accordingly, it is desired to evaluate whether addition of triglyceride based vegetable oils, instead of petroleum based oils could be used for suitably extending solvent solution prepared styrene/butadiene elastomers (SSBRs), particularly the high molecular weight (e.g. high Mooney viscosity) SSBRs.

Interestingly, it has been observed in such evaluation that use of a triglyceride based vegetable oil such as, for example, soybean oil extended organic solvent solution prepared styrene/butadiene elastomers having a relative high viscosity (Mooney viscosity) resulted in significantly lower viscosity for such uncured styrene/butadiene elastomer (SSBR) than a petroleum oil extended SSBR to thereby enable processing of an even higher molecular weight (even higher Mooney viscosity) SSBR. It is considered that such obtained lower viscosity for the uncured SSBR is both significantly advantageous and appeared to be essential to enable suitable processing for the SSBR at both the rubber manufacturing facility and at a rubber composition preparation facility.

Accordingly, it has been discovered that use of soybean oil instead of petroleum oil has resulted in better processing of a higher viscosity SSBR to promote better physical properties for the rubber composition containing such soybean oil extended SSBR.

Historically, a vegetable oil such as for example soybean oil, or soy oil, has been used for mixing with various rubber compositions by free oil addition to the rubber composition rather than soy oil extension of the elastomer at its point of manufacture.. For example, and not intended to be limiting, see US-A- 7,919,553, US-A- 8,100,157 and US-A- 8,022,136. Soybean oil has also been used for oil extending emulsion polymerized elastomers for some circumstances. For example, see US-A- 8,044,118.

However, for this invention, it is desired to evaluate use of triglyceride based vegetable oils such as for example, soybean oil, for extending organic solvent solution polymerization prepared styrene/butadiene copolymer elastomers, particularly high molecular weight elastomers, during their manufacture.

For such evaluation, it is important to appreciate that various vegetable oils, including soybean oil, differ significantly from petroleum based oils, particularly where such vegetable oils are triglycerides which contain a significant degree of unsaturation and clearly not a linear or an aromatic petroleum based oil. Addition of such triglyceride to a cement of a freshly made SSBR contained in its solvent of preparation is considered herein as being of a speculative benefit without trial and evaluation.

The triglyceride(s) for vegetable oils such as, for example, soybean oil, sunflower oil and canola oil are in a form of esters containing a degree of unsaturation. Therefore, use of such triglyceride(s) containing a degree of unsaturation for treatment of a SSBR in its cement composed of the SSBR and organic solvent might be expected to promote a very different oil extended SSBR effect than use of petroleum based oil elastomer for such purpose which may necessitate modifications, hopefully beneficial modifications, of SSBR processing at the SSBR manufacturing facility and at the rubber composition preparation facility.

The following Table A is presented to provide a general illustration of relative saturated, mono unsaturated and polyunsaturated contents of various vegetable oils (triglyceride oils).

**Table A**

| Vegetable Oil | Percent Saturated | Percent Mono Unsaturated | Percent Poly Unsaturated |
|---|---|---|---|
| Soybean | 16 | 23 | 58 |
| Sunflower | 10 | 45 | 40 |
| Canola (Rapeseed) | 7 | 63 | 28 |
| Corn | 13 | 28 | 55 |
| Coconut | 87 | 6 | 2 |
| Cottonseed | 26 | 18 | 52 |
| Olive | 14 | 73 | 11 |
| Palm | 49 | 37 | 9 |
| Peanut | 17 | 46 | 32 |
| Safflower | 10 | 45 | 40 |

Therefore, such use of vegetable oils for extending the SSBR in its solvent cement form may present requirements for potential modifications of sulfur cure packages for the vegetable oil extended SSBR because of additional unsaturation being present in the triglyceride oil as well as potentially presenting a different array of sulfur cured rubber physical properties for consideration when used with various rubber compositions for tire components as compared to petroleum based oil extended synthetic rubbers.

Such challenges are to be evaluated for triglyceride treatment of SSBR containing cement with results being unknown until the evaluation is undertaken.

In the description of this invention, the terms "compounded" rubber compositions and "compounds"; where used refer to rubber compositions which have been compounded, or blended, with appropriate rubber compounding ingredients. The terms "rubber" and "elastomer" may be used interchangeably unless otherwise indicated. The amounts of materials are usually expressed in parts of material per 100 parts of rubber by weight (phr).

### Summary and Practice of the Invention

The invention relates to a method in accordance with claim 1, to a composite in accordance with claim 8, a rubber composition in accordance with claim 10 and to an article of manufacture in accordance with claim 13

Dependent claims refer to preferred embodiments of the invention.

In one aspect, the invention is directed to a triglyceride extending a styrene/butadiene elastomer (SSBR) in its solvent-containing cement, and thereby before recovery of the SSBR, particularly a cement resulting from solvent solution prepared polymerization of styrene and 1,3-butadiene monomers.

In accordance with this invention, a method of preparing a triglyceride extended organic solution polymerization prepared styrene/butadiene elastomer comprises, based on parts by weight per 100 parts by weight of elastomer (phr):
(A) anionically initiating polymerization of monomers comprising styrene and 1,3-butadiene in an organic solvent solution to form a synthetic styrene/butadiene elastomer (SSBR) contained in a cement comprising said SSBR and solvent;
(B) terminating said polymerization of said monomers in said cement;
(C) blending from 5 to 60, alternately from 10 to 40, phr of triglyceride vegetable oils (other than petroleum based oil), and
(D) recovering said SSBR as a composite of said SSBR and said triglyceride.

Representative of such triglyceride vegetable oils are, for example, at least one of soybean, sunflower, canola (rapeseed), corn, coconut, cottonseed, olive, palm, peanut, and safflower oils. Usually at least one of soybean, sunflower, canola and corn oil is desired.

In further accordance with this invention, a composite of a triglyceride containing SSBR prepared by such method is provided.

In additional accordance with this invention a composite of a triglyceride containing tin or silicon coupled SSBR composite prepared by such method is provided.

In additional accordance with this invention a composite of a triglyceride containing SSBR containing at least one functional group prepared by such method is provided.

In further accordance with this invention, a rubber composition containing at least one of said SSBR composites is provided.

In further accordance with this invention, a rubber composition containing said SSBR composite is provided which further contains an additive to the rubber composition comprising at least one of triglyceride oil and petroleum based oil (in addition to the triglyceride oil contained in said SSBR composite). Such additional triglyceride oil and/or petroleum based oil is therefore added to the rubber composition itself instead of selective addition to the SSBR. Such additional triglyceride oil may comprise, for example, at least one of said triglyceride oils such as, for example, at least one of soybean oil, sunflower oil, corn oil and canola oil.

In additional accordance with this invention, an article of manufacture, such as for example a tire, is provided having a component comprised of such rubber composition.

In one embodiment of said method, said SSBR, (in a form of a high molecular weight SSBR) (in the absence of solvent and triglyceride), has a Mooney viscosity (23°C) in a range of from 50 to 180, alternately from 80 to 120. It is recognized that a high viscosity (Mooney viscosity) of the SSBR above a Mooney viscosity 80 and particularly 100, would provide significant processing difficulties for the SSBR.

It is appreciated that the above mentioned high Mooney viscosity (23°C) of 80, particularly of 100 or above is evidentiary of a relatively high molecular weight of the SSBR.

In one embodiment of said method, said triglyceride oil extended composite of SSBR (in the absence of said solvent) has a significantly reduced Mooney viscosity (23°C) in a range of, for example, and depending upon the Mooney viscosity of the SSBR itself, from 25 to 85 to present a more beneficially processable SSBR composite.

In one embodiment, said triglycerides are composed of a mixture of naturally occurring triglycerides recovered from, for example soybeans, composed of at least one of, usually at least three of glycerol tri-esters of at least one and usually at least three unsaturated fatty acids. Such fatty acids typically primarily comprise, for example, of at least one of linolenic acid, linoleic acid, and oleic acid.

For example, such combination of unsaturated fatty acids may comprise a blend of:

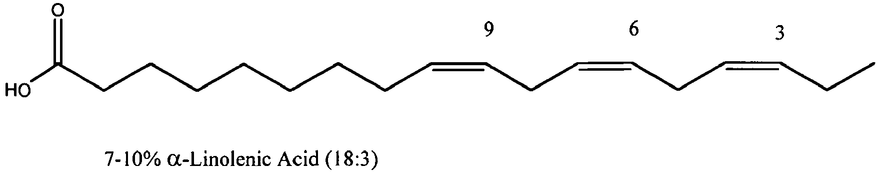

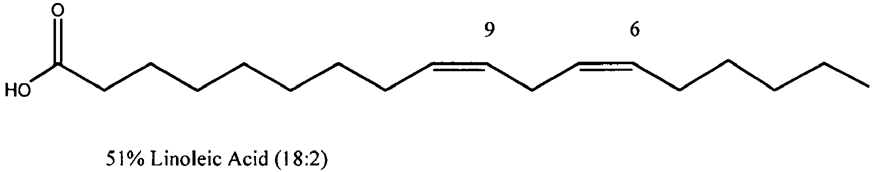

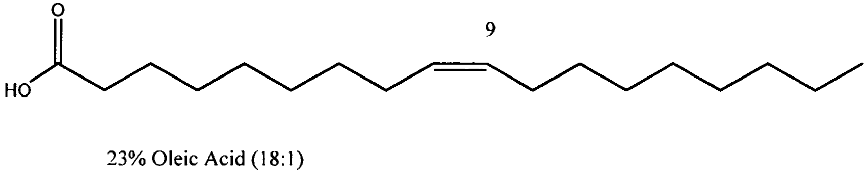

In the case of soybean oil, for example, the above represented percent distribution, or combination, of the fatty acids for the glycerol tri-esters, namely the triglycerides, is represented as being an average value and may vary somewhat depending primarily on the type, or source of the soybean crop, and may also depend on the growing conditions of a particular soybean crop from which the soybean oil was obtained. There are also significant amounts of other saturated fatty acids typically present, though these usually do not exceed 20 percent of the soybean oil.

In one embodiment, the SSBR may be a tin or silicon coupled elastomer.

In one embodiment, the SSBR may be a functionalized SSBR containing, for example, at least one functional group comprised of amine, siloxy, carboxyl and hydroxyl groups, particularly functional groups. Such functional groups may be reactive with, for example, silanol groups on a synthetic amorphous silica such as, for example, a precipitated silica.

In one embodiment, the SSBR is a tin or silicon coupled SSBR containing, for example, at least one functional group comprised of amine, siloxy, carboxyl and hydroxyl groups. Such functional groups may be for example reactive with, for example, silanol groups on a synthetic amorphous silica such as, for example, a precipitated silica.

The anionic polymerizations employed in making such SSBR in the organic solvent solution are typically initiated by adding an organolithium initiator to an organic solution polymerization medium which contains the styrene and 1,3-butadiene monomers. Such polymerizations are typically carried out utilizing continuous or batch polymerization techniques. In such continuous polymerizations, monomers and initiator are continuously added to the organic solvent polymerization medium with the synthesized rubbery styrene/butadiene elastomer (SSBR) being continuously withdrawn in its organic solvent solution as a cement thereof. Such continuous polymerizations are typically conducted in a multiple reactor system.

Suitable polymerization methods are known in the art, for example, and without an intended limitation, as disclosed in one or more US-A- 4,843,120; US-A-5,137,998; US-A- 5,047,483; US-A- 5,272,220; US-A- 5,239,009; US-A- 5,061,765; US-A- 5,405,927; US-A- 5,654,384; US-A- 5,620,939; US-A- 5,627,237; US-A-5,677,402; US-A- 6,103,842; and US-A- 6,559,240.

The SSBRs of the present invention are produced by anionic initiated polymerization employing an organo alkali metal compound, usually an organo monolithium compound, as an initiator. The first step of the process involves contacting the combination of styrene and 1,3-butadiene monomer(s) to be polymerized with the organo monolithium compound (initiator) in the presence of an inert diluent, or solvent, thereby forming a living polymer compound having the simplified structure A-Li. The monomers may be a vinyl aromatic hydrocarbon such as the styrene and a conjugated diene such as the 1,3-butadiene. Styrene is the preferred vinyl aromatic hydrocarbon and the preferred diene is 1,3-butadiene.

The inert diluent may be an aromatic or naphthenic hydrocarbon, e.g., benzene or cyclohexane, which may be modified by the presence of an alkene or alkane such as pentenes or pentanes. Specific examples of other suitable diluents include n-pentane, hexane such as for example n-hexane, isoctane, cyclohexane, toluene, benzene, xylene and the like. The organomonolithium compounds (initiators) that are reacted with the polymerizable additive in this invention are represented by the formula a RLi, wherein R is an aliphatic, cycloaliphatic, or aromatic radical, or combinations thereof, preferably containing from 2 to 20 carbon atoms per molecule. Exemplary of these organomonolithium compounds are ethyllithium, n-propyllithium, isopropyllithium, n-butyllithium, sec-butyllithium, tertoctyllithium, n-decyllithium, n-eicosyllithium, phenyllithium, 2-naphthyllithium, 4-butylphenyllithium, 4-tolyllithium, 4-phenylbutyllithium, cyclohexyllithium, 3,5-di-n-heptylcyclohexyllithium, 4-cyclopentylbutyl-lithium, and the like. The alkyllithium compounds are preferred for employment according to this invention, especially those wherein the alkyl group contains from 3 to 10 carbon atoms. A much preferred initiator is n-butyllithium.

The amount of organolithium initiator to effect the anionically initiated polymerization will vary with the monomer(s) being polymerized and with the molecular weight that is desired for the polymer being synthesized. However, generally, from 0.01 to 1 phm (parts per 100 parts by weight of monomer) of an organolithium initiator will be often be utilized. In many cases, from 0.01 to 0.1 phm of an organolithium initiator will be utilized with it often being more desirable to utilize 0.025 to 0.07 phm of the organolithium initiator.

The polymerization temperature utilized can vary over a broad range such as, for example, from about -20°C to about 180°C. However, often a polymerization temperature within a range of about 30°C to about 125°C will be desired. It is often typically desired for the polymerization temperature to be within a more narrow range of about 45°C to about 100°C or within a range of from about 60°C to about 85°C. The pressure used for the polymerization reaction, where applicable, will normally be sufficient to maintain a substantially liquid phase under the conditions of the polymerization reaction.

The SSBRs prepared in the organic solution by the anionically initiated polymerization may be coupled with a suitable coupling agent, such as a tin halide or a silicon halide, to improve desired physical properties by increasing their molecular weight with a usual increase in their viscosity (e.g. Mooney viscosity of the uncured SSBR). Tin-coupled styrene/butadiene polymers have been observed to improve tire treadwear and to reduce tire rolling resistance when used in tire tread rubbers. Such tin-coupled SSBRs are typically made by coupling the SSBR with a tin coupling agent at or near the end of the polymerization used in synthesizing the SSBR. In the coupling process, live polymer chain ends react with the tin coupling agent, thereby coupling the SSBR. For example, up to four live chain ends can react with tin tetrahalides, such as tin tetrachloride, thereby coupling the polymer chains together.

The coupling efficiency of the tin coupling agent is dependant on many factors, such as the quantity of live chain ends available for coupling and the quantity and type of polar modifier, if any, employed in the polymerization. For instance, tin coupling agents are generally not as effective in the presence of polar modifiers. However, polar modifiers such as tetramethylethylenediamine, are frequently used to increase the glass transition temperature of the rubber for improved properties, such as improved traction characteristics in tire tread compounds. Coupling reactions that are carried out in the presence of polar modifiers typically have a coupling efficiency of about 50-60% in batch processes.

In cases where the SSBR will be used in rubber compositions that are loaded primarily with carbon black reinforcement, the coupling agent for preparing the elastomer may typically be a tin halide. The tin halide will normally be a tin tetrahalide, such as tin tetrachloride, tin tetrabromide, tin tetrafluoride or tin tetraiodide. However, mono-alkyl tin trihalides can also optionally be used. Polymers coupled with mono-alkyl tin trihalides have a maximum of three arms. This is, of course, in contrast to SSBRs coupled with tin tetrahalides which have a maximum of four arms. To induce a higher level of branching, tin tetrahalides are normally preferred. As a general rule, tin tetrachloride is usually the most preferred.

In cases where the SSBR will be used in compounds that are loaded with high levels of silica, the coupling agent for preparing the SSBR will typically be a silicon halide. The silicon-coupling agents that can be used will normally be silicon tetrahalides, such as silicon tetrachloride, silicon tetrabromide, silicon tetrafluoride or silicon tetraiodide. However, mono-alkyl silicon trihalides can also optionally be used. SSBRs coupled with silicon trihalides have a maximum of three arms. This is, of course, in contrast to SSBRs coupled with silicon tetrahalides during their manufacture which have a maximum of four arms. To induce a higher level of branching, if desired, of the SSBR during its manufacture, silicon tetrahalides are normally preferred. In general, silicon tetrachloride is usually the most desirable of the silicon-coupling agents for such purpose.

In one embodiment, various organic solvents may be used for the polymerization medium which are relatively inert to the polymerization reaction such as for example, the aforesaid n-pentane, n-hexane, isooctane, cyclohexane, toluene, benzene, xylene and the like, (exclusive, of course, of water based emulsifier containing liquid mediums). Solvent removal from the polymerizate, or cement, may be accomplished using one or more of the methods as are known in the art, including but not limited to precipitation, steam stripping, filtration, centrifugation, drying and the like.

The recovered triglyceride oil extended SSBR may be compounded (blended) into a vulcanizable (sulfur vulcanizable) rubber composition which may, and will usually, include other elastomers, particularly sulfur curable diene-based elastomers, as is well known to those familiar with such art. The phrase "sulfur curable rubber" or elastomer such as "diene-based elastomers" is intended to include both natural rubber and its various raw and reclaim forms as well as various synthetic rubbers including the SSBR used in the practice of this invention.

In further accordance with this invention, a rubber composition is provided comprising said triglyceride oil extended SSBR.

In additional accordance with this invention, a rubber composition is provided comprising, based upon parts by weight per 100 parts by weight rubber (phr):
(A) conjugated diene-based elastomers comprising:
   (1) 70 to 100, alternately from 50 to 80, phr of triglyceride oil extended SSBR (according to this invention), and correspondingly
   (2) from zero to 30, alternately from 20 to 50, phr of at least one additional elastomer comprised of at least one of polymers of at least one of isoprene and 1,3-butadiene and copolymers of styrene and at least one of isoprene and 1,3-butadiene (in addition to and therefore other than said triglyceride oil extended SSBR);
(B) 40 to 110, alternately from 50 to 80, phr of a reinforcing filler comprising:
   (1) silica such as amorphous synthetic silica (e.g. precipitated silica), or
   (2) a rubber reinforcing carbon black, or
   (3) a combination of silica or precipitated silica and rubber reinforcing carbon black (containing, for example, 20 to 90 weight percent of silica, alternately from 55 to 90 weight percent silica for silica-rich reinforcing filler and alternately from 20 to 45 weight percent silica for a carbon black-rich reinforcing filler);
(C) a silica coupling agent (for said silica where said reinforcing filler contains silica) having a moiety reactive with hydroxyl groups (e.g. silanol groups) on said silica and another different moiety interactive with carbon-to-carbon double bonds of said conjugated diene-based elastomers (including said SSBR).

In further accordance with this invention a tire is provided which contains at least one component comprising said rubber composition.

Representative examples of said additional rubbers, or elastomers, are, for example, cis 1,4-polyisoprene, cis 1,4-polybutadiene, isoprene/butadiene, styrene/isoprene, styrene/butadiene and styrene/isoprene/butadiene elastomers. Additional examples of elastomers which may be used include 3,4-polyisoprene rubber, carboxylated rubber, silicon-coupled and tin-coupled star-branched elastomers. Often desired rubber or elastomers are cis 1,4-polybutadiene, styrene/butadiene rubber and cis 1,4-polyisorprene rubber.

Such precipitated silicas may, for example, be characterized by having a BET surface area, as measured using nitrogen gas, in the range of, for example, 40 to 600, and more usually in a range of 50 to 300 square meters per gram. The BET method of measuring surface area might be described, for example, in the Journal of the American Chemical Society, Volume 60, as well as ASTM D3037.

Various commercially available precipitated silicas may be used, such as, only for example herein, and without limitation, silicas from PPG Industries under the Hi-Sil trademark with designations 210 and 243; silicas from Rhodia, with, for example, designations of Z1165MP and Z165GR; silicas from Evonic with, for example, designations VN2 and VN3; and chemically treated precipitated silicas such as for example Agilon™ 400 from PPG.

Representative examples of rubber reinforcing carbon blacks are, for example, and not intended to be limiting, those with ASTM designations of N110, N121, N220, N231, N234, N242, N293, N299, S315, N326, N330, N332, N339, N343, N347, N351, N358, N375, N539, N550, N582, N630, N642, N650, N683, N754, N762, N765, N774, N787, N907, N908, N990 and N991. Such rubber reinforcing carbon blacks may have iodine absorptions ranging from, for example, 9 to 145 g/kg and DBP numbers ranging from 34 to 150 cc/100 g.

Other fillers may be used in the vulcanizable rubber composition including, but not limited to, particulate fillers including ultra high molecular weight polyethylene (UHMWPE); particulate polymer gels such as those disclosed in US-A-6,242,534; US-A- 6,207,757; US-A- 6,133,364; US-A- 6,372,857; US-A- 5,395,891; or US-A- 6,127,488, and plasticized starch composite filler such as that disclosed in US-A- 5,672,639. One or more other fillers may be used in an amount ranging from 1 to 20 phr.

It may be desired for the precipitated silica-containing rubber composition to contain a silica coupling agent for the silica comprising, for example,
(A) bis(3-trialkoxysilylalkyl) polysulfide containing an average in range of from 2 to 4 sulfur atoms in its connecting bridge, or
(B) an organoalkoxymercaptosilane, or
(C) their combination.

Representative of such bis(3-trialkoxysilylalkyl) polysulfide is comprising bis(3-triethoxysilylpropyl) polysulfide.

It is readily understood by those having skill in the art that the vulcanizable rubber composition would be compounded by methods generally known in the rubber compounding art, such as, for example, mixing various additional sulfur-vulcanizable elastomers with said SSBR composite and various commonly used additive materials such as, for example, sulfur and sulfur donor curatives, sulfur vulcanization curing aids, such as activators and retarders and processing additives, resins including tackifying resins and plasticizers, petroleum based or derived process oils as well as triclycerides in addition to said triglyceride extended SSBR, fillers such as rubber reinforcing fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Usually it is desired that the sulfur-vulcanizing agent is elemental sulfur. The sulfur-vulcanizing agent may be used in an amount ranging, for example, from 0.5 to 8 phr, with a range of from 1.5 to 6 phr being often preferred. Typical amounts of tackifier resins, if used, may comprise, for example, 0.5 to 10 phr, usually 1 to 5 phr. Typical amounts of processing aids comprise 1 to 50 phr. Additional process oils, if desired, may be added during compounding in the vulcanizable rubber composition in addition to the extending triglyceride oil contained in the triglyceride extended SSBR. The additional petroleum based or derived oils may include, for example, aromatic, paraffinic, napthenic, and low PCA oils such as MEW, TDAE, and heavy napthenic, although low PCA oils might be preferred. Typical amounts of antioxidants may comprise, for example, 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants may comprise, for example, 1 to 5 phr. Typical amounts of fatty acids, if used, which can include stearic acid comprise 0.5 to 3 phr. Typical amounts of zinc oxide may comprise, for example, to 5 phr. Typical amounts of waxes comprise 1 to 5 phr. Often microcrystalline waxes are used. Typical amounts of peptizers, when used, may be used in amounts of, for example, 0.1 to 1 phr. Typical peptizers may be, for example, pentachlorothiophenol and dibenzamidodiphenyl disulfide.

Sulfur vulcanization accelerators are used to control the time and/or temperature required for vulcanization and to improve the properties of the vulcanizate. In one embodiment, a single accelerator system may be used, i.e., primary accelerator. The primary accelerator(s) may be used in total amounts ranging, for example, from 0.5 to 4, sometimes desirably 0.8 to 1.5, phr. In another embodiment, combinations of a primary and a secondary accelerator might be used with the secondary accelerator being used in smaller amounts, such as, for example, from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Often desirably the primary accelerator is a sulfenamide. If a second accelerator is used, the secondary accelerator is often desirably a guanidine such as for example a diphenylguanidine, a dithiocarbamate or a thiuram compound.

The mixing of the vulcanizable rubber composition can be accomplished by methods known to those having skill in the rubber mixing art. For example, the ingredients are typically mixed in at least two stages, namely at least one non-productive stage followed by a productive mix stage. The final curatives, including sulfur-vulcanizing agents, are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

The vulcanizable rubber composition containing the triglyceride oil extended SSBR may be incorporated in a variety of rubber components of an article of manufacture such as, for example, a tire. For example, the rubber component for the tire may be a tread (including one or more of a tread cap and tread base), sidewall, apex, chafer, sidewall insert, wirecoat or innerliner.

The pneumatic tire of the present invention may be a race tire, passenger tire, aircraft tire, agricultural, earthmover, off-the-road or truck tire. Usually desirably the tire is a passenger or truck tire. The tire may also be a radial or bias ply tire, with a radial ply tire being usually desired.

Vulcanization of the pneumatic tire of the present invention is generally carried out at conventional temperatures in a range of, for example, from 140°C to 200°C. Often it is desired that the vulcanization is conducted at temperatures ranging from 150°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating the present invention. All parts and percentages are parts by weight, usually parts by weight per 100 parts by weight rubber (phr) unless otherwise indicated.

### EXAMPLE I

In this example, the effect of triglyceride oil, namely soybean oil, extending and of petroleum oil extending an anionically initiated organic solution polymerization of styrene and 1,3-butadiene monomers to prepare a styrene/butadiene elastomer (SSBR, an abbreviation for such solution polymerization prepared styrene/butadiene rubber) is demonstrated.

### Preparation of the Base SSBR

An ionically initiated polymerization reaction was conducted in a 2000 liter reactor equipped with external heating/cooling jacket, and external agitator. The reactor temperature was controlled in the range of 63°C to 71 °C throughout the reaction run time while the internal pressure ranged from 97 to 186 kPa.

A hexane solution containing 12 weight percent total monomers (composed of 70 weight percent 1,3-butadiene and 30 weight percent styrene) in hexane was charged into the reactor. TMEDA (Tetramethylethylenediamine, 0.12 pphm) was added through a dip tube into the reactor followed by SMT (sodium mentholate, 0.0035 pphm). After reaching the prescribed temperature, the anionic polymerization initiator, n-BuLi (n-butyllithium 1.6 M in hexane, 0.025 pphm) was then added to the reactor. Upon achieving an acceptable conversion of the monomers (90 to 95 percent), the resulting elastomer cement comprising the styrene/butadiene elastomer and hexane solvent was transferred into a 2000 liter tank, where a polymerization termination agent (Polystay K, 0.5 pphm) was added.

Microstructure analysis of the recovered SSBR elastomer gave bound styrene = 31.7 weight percent, and an olefin microstructure distribution of vinyl = 63.5 percent, cis = 21.4 percent, and trans = 15.1 percent.

The Mooney viscosity (23°C), ML(1+4) of the recovered SSBR was about 107.

### Petroleum Oil Extension of Base SSBR; Preparation of Polymer X

The base SSBR (102 kg), still contained in its cement and therefore containing the reaction solvent, namely the hexane, was blended with petroleum oil in a form of naphthenic oil (obtained as Ergon™ L2000), in an amount of 36.8 pphr, (or parts by weight per hundred parts of the elastomer). The final blend was finished by steam stripping in a 400 liter stripper to remove the solvent. The wet recovered SSBR composite was removed from the stripper and dried through an expeller. The collected styrene/butadiene elastomer composite was placed in an oven for drying.

The Mooney viscosity (23°C), ML(1+4) of the recovered SSBR composite (Polymer X) had a significantly reduced value of about 52.8.

### Triglyceride (Soybean Oil) Extension of Base SSBR; Preparation of Polymer Y

The same procedure used for preparation of Polymer X, was also followed for the triglyceride oil extension with soybean oil. In this case 102 kg of the base SSBR was mixed with soybean oil (36.9 pphr).

The Mooney viscosity (23°C), ML(1+4) of the recovered SSBR composite (Polymer Y) had a significantly reduced value of about 40 which, in addition, was very significantly below the Mooney viscosity of 52.8 obtained for the petroleum oil extended SSBR.

Accordingly, although the mechanism might not be fully understood, it is concluded that a significant and beneficial discovery was made with the soybean oil extension of the SSBR by finishing the preparation of the SSBR with the inclusion of the soybean oil in the solvent-containing SSBR cement which significantly and beneficially enabled a greater reduction of the recovered SSBRs Mooney viscosity than the petroleum oil inclusion which thereby beneficially enabled an improved processing of the SSBR composite (Polymer Y) at the SSBR production facility as well as the SSBR compounding facility.

### EXAMPLE II

Experiments were conducted to evaluate the effect of employing the petroleum oil extended elastomer (SSBR), namely Polymer X and triglyceride oil (soybean oil) extended elastomer (SSBR), namely Polymer Y, of Example I in a rubber composition which contained carbon black reinforcement.

Rubber compositions identified herein as Control rubber Sample A and Experimental rubber Sample B were prepared and evaluated.

Control rubber Sample A contained the petroleum based oil extended SSBR, namely Polymer X.

Experimental rubber Sample B contained the triglyceride oil (soybean oil) extended SSBR of Example I, namely Polymer Y.

The rubber Samples were prepared by mixing the elastomers with reinforcing filler as rubber reinforcing carbon black without precipitated silica together in a first non-productive mixing stage (NP1) in an internal rubber mixer for about 4 minutes to a temperature of about 160°C. The resulting mixture was subsequently mixed in a second sequential non-productive mixing stage (NP2) in an internal rubber mixer to a temperature of 160°C with no additional ingredients added. The rubber composition was subsequently mixed in a productive mixing stage (P) in an internal rubber mixer with a sulfur cure package, namely sulfur and sulfur cure accelerator(s), for 2 minutes to a temperature of 115°C. The rubber composition is removed from its internal mixer after each mixing step and cooled to below 40°C between each individual non-productive mixing stage and before the final productive mixing stage.

The basic formulation for the Control rubber Sample A and Experimental rubber Sample B is presented in the following Table 1 expressed in parts by weight per 100 parts of rubber (phr) unless otherwise indicated.

**Table 1**

| Non-Productive Mixing Stage (NP) | Parts by weight (phr) |
|---|---|
| Petroleum oil extended SSBR (Polymer X)¹ | 75 or 0, with 28.12 parts oil |
| Soybean oil extended SSBR (Polymer Y)² | 0 or 75, with 28.12 parts oil |
| Cis 1,4-polybutadiene elastomer³ | 25 |
| Carbon black⁴ | 73 |
| Wax, microcrystalline | 3.8 |
| Zinc oxide | 1.8 |
| Fatty acid⁵ | 2 |
| Processing oil, petroleum derived (naphthenic) | 12 |
| | |

| Productive Mixing Stage (P) | |
|---|---|
| Sulfur | 1.6 |
| Sulfur cure accelerator(s)⁶ | 1.8 |
| Antioxidant | 1.2 |

| | |
|---|---|
| ¹Solution polymerization prepared styrene/butadiene rubber (SSBR) composite as Polymer X illustrated in Example I having about 30 percent bound styrene, 41 percent vinyl content for its butadiene portion and, for this Example, containing 37.5 parts rubber processing petroleum based naphthenic oil per 100 parts rubber and reported in the Table as parts by weight of the SSBR itself. ²Solution polymerization prepared styrene/butadiene rubber (SSBR) composite as Polymer Y illustrated in Example I having about 30 percent bound styrene, 41 percent vinyl content for its butadiene portion and, for this Example, containing 37.5 parts soybean oil per 100 parts rubber and reported in the Table as parts by weight of the SSBR itself. ³Cis 1,4-polybutadiene rubber as BUD1207™ from The Goodyear Tire & Rubber Company ⁴N299 rubber reinforcing carbon black, ASTM identification ⁵Primarily comprised of stearic, palmitic and oleic acids ⁶Sulfenamide and diphenylguanidine accelerators | |

The following Table 2 illustrates cure behavior and various physical properties of rubber compositions based upon the basic recipe of Table 1 and reported herein as a Control rubber Sample A and Experimental rubber Sample B. Where cured rubber samples are examined, such as for the stress-strain, hot rebound and hardness values, the rubber samples were cured for 14 minutes at a temperature of 160°C.

**Table 2**

| | Samples | |
|---|---|---|
| | Control | Experimental |
| Materials (phr) | A | B |
| Petroleum based oil extended SSBR (Polymer X) | 75 | 0 |
| Soybean oil extended SSBR (Polymer Y) | 0 | 75 |
| Cis 1,4-polybutadiene rubber | 25 | 25 |
| | | |

| Properties | | |
|---|---|---|
| RPA¹ (100°C), Storage Modulus G', MPa | | |
| Uncured G' 15% strain, 0.83 Hertz (kPa) | 221 | 187 |
| Cured G' modulus, 10% strain, 11 Hertz (kPa) | 2798 | 2081 |
| Tan delta at 10% strain, (kPa) | 0.193 | 0.207 |
| | | |

| Rheometer (160°C) | | |
|---|---|---|
| T90 6 | 5.1 | |
| Delta torque | 15.4 | 12.2 |
| | | |

| Stress-strain, ATS², 14 min, 160°C | | |
|---|---|---|
| Tensile strength (MPa) | 15.4 | 14.9 |
| Elongation at break (%) | 425 | 590 |
| 300% modulus, ring (MPa) | 11.4 | 6.9 |
| | | |
| Rebound of cured rubber, 100°C | 52 | 51 |
| Shore A hardness of cured rubber, 100°C | 57 | 50 |
| Tear strength³ of cured rubber (N) | 76 | 133 |
| Abrasion rate (mg/km) of cured rubber, (Grosch)⁴ | | |
| Medium severity (40N), 6°slip angle, disk, | | |
| Speed = 20 km/hr, distance = 1,000 meters | 112 | 67 |

| | | |
|---|---|---|
| ¹Automated Testing System (ATS) instrument ²Rubber Process Analyzer (RPA) instrument ³Data obtained according to a tear strength (peal adhesion) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180°angle to each other using an Instron instrument at 95°C and reported as Newtons force (N). ⁴Grosch abrasion rate run on an LAT-100 Abrader measured in terms of mg/km of rubber abraded away. The test rubber sample is placed at a slip angle under constant load (Newtons) as it traverses a given distance on a rotating abrasive disk (disk from HB Schleifmittel GmbH). In practice, a low abrasion severity test may be run, for example, at a load of 20 Newtons, 2° slip angle, disk speed of 40 km/hr for a distance of 7,500 meters; a medium abrasion severity test may be run, for example, at a load of 40 Newtons, 6° slip angle, disk speed of 20 km/hr and distance of 1,000 meters; a high abrasion severity test may be run, for example, at a load of 70 Newtons, 12° slip angle, disk speed of 20 km/hr and distance of 250 meters; and an ultra high abrasion severity test may be run, for example, at a load of 70 Newtons, 16°slip angle, disk speed of 20 km/hr and distance of 500 meters. | | |

The results clearly show the improved processing benefit of the soybean oil extended Polymer Y (Rubber Sample B) as compared to the naphthenic oil extended Polymer X (Rubber Sample A)

In particular, it is seen that the significantly lower uncured Modulus G' value of 187 MPa was obtained for Rubber Sample B containing the soybean oil extended SSBR, namely Polymer Y, versus the significantly higher uncured Modulus G' value of 221 MPa obtained for the naphthenic oil extended SBR, namely Polymer X.

This is predictive of significantly better extrusion rates when using rubber Sample B to produce an extruded tread rubber composition.

This is also predictive of an ability to enable use of a significantly increased molecular weight (increased Mooney viscosity) for the SSBR when soybean oil extension is used with an expected useable processing ability for the rubber composition with an enhanced utility of the increased Mooney viscosity of the SSBR to enable beneficially improved hysteresis as well as increased stiffness and abrasion resistance of the resulting rubber composition.

It is also seen that the Rubber Sample B (containing the soybean extended SSBR) exhibited beneficially higher tear strength as compared to Rubber Sample A (containing the naphthenic oil extended SSBR).

The dramatic improvement in reduction of rate of abrasion to a value of only 67 mg/km for Rubber Sample B (containing the soybean extended SSBR) as compared to a much higher rate of abrasion of a value of 112 mg/km for Rubber Sample A (containing the naphthenic oil extended SSBR) was unexpected and is not considered as being readily explainable.

As mentioned, the filler reinforcement for Rubber Samples A and B is rubber reinforcing carbon black and therefore without containing (exclusive of) precipitated silica and silica coupling agent.

### EXAMPLE III

Experiments were conducted to evaluate the effect of employing the petroleum based oil extended elastomer (SSBR) and soybean oil extended elastomer (SSBR) of Example I in a rubber composition which contained reinforcing filler as a combination of rubber reinforcing carbon black and precipitated silica so that the reinforcing filler was silica rich, containing 90 phr of the silica and only 16 phr of the carbon black reinforcement.

Rubber compositions identified herein as Control rubber Sample C and Experimental rubber Samples D and E were prepared and evaluated.

Control rubber Sample C contained a petroleum based oil extended SSBR as Polymer X from Example I.

Experimental rubber Sample D contained the soybean oil extended SSBR as Polymer Y of Example I.

Experimental rubber Sample E is similar to Experimental rubber Sample D except that an increase, in an amount of about 20 percent, of sulfur curative content was used for the rubber composition.

The rubber Samples were prepared by mixing the elastomers with reinforcing fillers, namely rubber reinforcing carbon black and precipitated silica together in a first non-productive mixing stage (NP1) in an internal rubber mixer for 4 minutes to a temperature of about 160°C. The resulting mixture was subsequently mixed in a second sequential non-productive mixing stage (NP2) in an internal rubber mixer to a temperature of 160°C with no additional ingredients added. The rubber composition was subsequently mixed in a productive mixing stage (P) in an internal rubber mixer with a sulfur cure package, namely sulfur and sulfur cure accelerator(s), for 2 minutes to a temperature of 115°C. The rubber composition is removed from its internal mixer after each mixing step and cooled to below 40°C between each individual non-productive mixing stage and before the final productive mixing stage.

The basic formulation for the Control rubber Sample C, Experimental rubber Sample D and Experimental rubber Sample E is presented in the following Table 3 expressed in parts by weight per 100 parts of rubber (phr) unless otherwise indicated.

**Table 3**

| First Non-Productive Mixing Stage (NP1) | Parts by weight (phr) |
|---|---|
| Petroleum oil extended SSBR (Polymer A)¹ oil | 75 or 0, with 28.12 parts |
| Soybean oil extended SSBR (Polymer B)² | 0 or 75, with 28.12 parts oil |
| Cis 1,4-polybutadiene elastomer³ | 25 |
| Precipitated silica⁷ | 90 |
| Silica coupler (coupling agent)⁸ | 7.2 |
| Carbon black, N121⁴ | 16 |
| Wax, microcrystalline | 2 |
| Fatty acid⁵ | 3 |
| Processing oil, petroleum derived (naphthenic) | 3 |
| | |

| Productive Mixing Stage (P) | |
|---|---|
| Zinc oxide | 2.5 |
| Sulfur | 1.8 |
| Sulfur cure accelerator(s)⁶ | 4 |
| Antioxidant | 3 |

| | |
|---|---|
| ⁷Precipitated silica as Zeosil 1165™ MP from Rhodia ⁸Silica coupling agent as Si266™ from Evonic comprised of a bis(3-triethoxysilylpropyl) polysulfide containing an average in a range of from about 2 to about 2.6 connecting sulfur atoms in its polysulfidic bridge and used without a carbon black carrier. | |

The following Table 4 illustrates cure behavior and various physical properties of rubber compositions based upon the basic recipe of Table 1 and reported herein as a Control rubber Sample C, Experimental rubber Sample D and Experimental rubber Sample E. Where cured rubber samples are examined, such as for the stress-strain, hot rebound and hardness values, the rubber samples were cured for 14 minutes at a temperature of 160°C.

**Table 4**

| | Rubber Samples | | |
|---|---|---|---|
| | Control | Experimental | |
| Materials (phr) | C | D | E |
| Petroleum based oil extended SSBR (Polymer X) | 75 | 0 | 0 |
| Soybean oil extended SSBR (Polymer Y) | 0 | 75 | 75 |
| Cis 1,4-polybutadiene rubber | 25 | 25 | 25 |
| | | | |

| Properties | | | |
|---|---|---|---|
| RPA (100°C), Storage Modulus G', MPa | | | |
| Uncured G' 15% strain, 0.83 Hertz (kPa) | 260 | 252 | 255 |
| Cured G' modulus, 10% strain, 11 Hertz (kPa) | 2181 | 1839 | 1927 |
| Tan delta at 10% strain, (kPa) | 0.168 | 0.182 | 0.174 |
| | | | |

| Rheometer (160°C) | | | |
|---|---|---|---|
| T90 16.1 | 16.6 | 12.9 | |
| Delta Torque | 19.4 | 15.8 | 16 |
| | | | |

| Stress-strain, ATS, 14 min, 160°C | | | |
|---|---|---|---|
| Tensile strength (MPa) | 16.2 | 16.2 | 15.8 |
| Elongation at break (%) | 386 | 518 | 443 |
| 300 % modulus, ring (MPa) | 13.5 | 9.1 | 11.1 |
| | | | |
| Rebound, 100°C | 53 | 51 | 52 |
| Shore A Hardness, 100°C | 66 | 61 | 62 |
| Tear strength (N) | 68 | 135 | 88 |
| Abrasion rate (mg/km), (Grosch), high severity (70N) | 493 | 472 | 482 |

It is seen from Table 4 that the processing of Rubber Sample D containing the soybean oil extended SSBR in terms of its G' modulus of 252 MPa is improved as compared to the G' modulus of 260 for Rubber Sample C containing the naphthenic oil extended SSBR, the processing advantage is less, in terms of the comparative G' modulus values of the Rubber Samples seen in Example II for its Rubber Sample B containing the soybean oil extended SSBR.

In one aspect, Rubber Sample D (containing the soybean oil extended SSBR) in this Example III used a combination of silica and carbon black in a silica-rich reinforcing filler where Rubber Sample B (containing the soybean oil extended SSBR) in the previous Example II used rubber reinforcing carbon black as the reinforcing filler without the silica.

However, it is seen in Rubber Sample E that a small adjustment in the curative content in the rubber Sample (about a 20 percent increase was used) to better match physical properties of the naphthenic oil extended SSBR of the Control Rubber Sample E, allows a fairly good match of many of indicated cured rubber properties.

The cure adjusted rubber Sample E using the soybean oil extended SSBR also still exhibits improved tear strength (resistance to tear) and abrasion resistance when compared to the Control rubber Sample C using the naphthenic oil extended SSBR.

The results of these two Examples, II and III, suggest that the soybean oil extension of the SSBR can reduce viscosity (Mooney viscosity) of the rubber composition and improve its abrasion resistance when used as a replacement for conventional rubber processing petroleum oil, particularly in the rubber composition containing carbon black as the reinforcing filler.

## Claims

1. A method of preparing a triglyceride extended organic solution polymerization prepared styrene/butadiene elastomer, the method comprising, based on parts by weight per 100 parts by weight of elastomer (phr):
(A) anionically initiating a polymerization of monomers comprising styrene and 1,3-butadiene in an organic solvent solution to form a synthetic styrene/butadiene elastomer (SSBR) contained in a cement comprising said SSBR and solvent;
(B) terminating said polymerization of said monomers in said cement;
(C) blending from 5 to 60, alternately from 10 to 40, phr of at least one triglyceride vegetable oil; and
(D) recovering said SSBR as a composite of said SSBR and said triglyceride.

2. The method of claim 1 wherein said triglyceride vegetable oil comprises at least one of soybean, sunflower, canola (rapeseed), corn, coconut, cottonseed, olive, palm, peanut, and safflower oils; and/or and wherein said organic solution polymerization prepared styrene/butadiene elastomer is preferably exclusive of petroleum oil.

3. The method of claim 1 or 2 wherein said SSBR has a Mooney viscosity (23°C) in a range of from 50 to 180.

4. The method of claim 3 wherein said SSBR has a Mooney viscosity (23°C) in a range of from 80 to 120.

5. The method of at least one of the previous claims wherein said SSBR is a tin or silicon coupled SSBR.

6. The method of at least one of the previous claims wherein said SSBR is a functionalized SSBR containing at least one functional group comprising at least one of amine, siloxy, carboxyl and hydroxyl groups.

7. The method of at least one of the previous claims wherein said SSBR is the product of an anionic initiated polymerization of styrene and 1,3-butadiene employing n-butyllithium as an initiator in the presence of an inert solvent.

8. A composite of a triglyceride containing SSBR prepared by the method of at least one of the previous claims.

9. The composite of claim 8 wherein the SSBR has at least one functional group.

10. A rubber composition containing the composite of claim 8 or 9.

11. The rubber composition of claim 10 further containing an additive comprising of at least one of triglyceride oil and petroleum based oil.

12. The rubber composition of claims 10 or 11, comprising, based upon parts by weight per 100 parts by weight rubber (phr):
(A) conjugated diene-based elastomers comprising:
(1) 70 to 100 phr of triglyceride oil extended SSBR composite of claim 8 or 9, and correspondingly
(2) from zero to 30 phr of at least one additional elastomer comprising at least one of polymers of at least one of isoprene and 1,3-butadiene and copolymers of styrene and at least one of isoprene and 1,3-butadiene;
(B) 40 to 110 phr of a reinforcing filler comprising:
(1) silica such as amorphous synthetic silica or precipitated silica, or
(2) a rubber reinforcing carbon black, or
(3) a combination of silica and a rubber reinforcing carbon black; and
(C) optionally a silica coupling agent for said silica where said reinforcing filler contains silica, the silica coupling agent having a moiety reactive with hydroxyl groups on said silica and another different moiety interactive with carbon-to-carbon double bonds of said conjugated diene-based elastomers.

13. An article of manufacture having a component comprising the rubber composition of claim 10, 11 or 12.

14. The article of manufacture of claim 12 wherein the article of manufacture is a tire.

15. The article of manufacture of claim 14 wherein said reinforcing filler is a combination of rubber reinforcing carbon black and precipitated silica containing from 55 to 90 weight percent of said precipitated silica, or wherein said reinforcing filler is a combination of rubber reinforcing carbon black and precipitated silica containing from 20 to 45 weight percent of said precipitated silica.

## Patentansprüche

1. Verfahren zur Herstellung eines Triglycerid-gestreckten, durch organische Lösungspolymerisation hergestellten Styrol-Butadien-Elastomers, wobei das Verfahren, auf Basis von Gewichtsteilen je 100 Gewichtsteile Elastomer (ThK), umfasst:
(A) anionisch Initiieren einer Polymerisation von Monomeren, umfassend Styrol und 1,3-Butadien, in einer organischen Lösungsmittellösung, zur Bildung eines synthetischen Styrol-Butadien-Elastomers (SSBR), das in einem Zement enthalten ist, der besagtes SSBR und Lösungsmittel enthält;
(B) Beenden der Polymerisation der Monomere in dem Zement;
(C) Zumischen von 5 bis 60, alternativ 10 bis 40, ThK mindestens eines Triglycerid-Pflanzenöls; und
(D) Rückgewinnen des SSBR als Verbundwerkstoff des SSBR und des Triglycerids.

2. Verfahren nach Anspruch 1, wobei das Triglycerid-Pflanzenöl mindestens eines von Soja-, Sonnenblumen-, Raps- (Rübsamen-), Maiskeim-, Kokos-, Baumwollsamen-, Oliven-, Palm-, Erdnuss- und Färberdistelölen umfasst; und/oder wobei das durch organische Lösungspolymerisation hergestellte Styrol-Butadien-Elastomer bevorzugt unter Ausschluss von Mineralöl ist.

3. Verfahren nach Anspruch 1 oder 2, wobei das SSBR eine Mooney-Viskosität (23°C) im Bereich von 50 bis 180 aufweist.

4. Verfahren nach Anspruch 3, wobei das SSBR eine Mooney-Viskosität (23°C) im Bereich von 80 bis 120 aufweist.

5. Verfahren nach mindestens einem der vorgenannten Ansprüche, wobei das SSBR ein zinn- oder siliziumgekoppeltes SSBR ist.

6. Verfahren nach mindestens einem der vorgenannten Ansprüche, wobei das SSBR ein funktionalisiertes SSBR ist, das mindestens eine funktionelle Gruppe enthält, welche mindestens eine von Amin-, Siloxy-, Carboxyl- und Hydroxylgruppen umfasst.

7. Verfahren nach mindestens einem der vorgenannten Ansprüche, wobei das SSBR das Produkt einer anionischen initiierten Polymerisation von Styrol und 1,3-Butadien unter Einsatz von n-Butyllithium als Initiator in Gegenwart eines inerten Lösungsmittels ist.

8. Verbundwerkstoff aus einem triglyceridhaltigen SSBR, hergestellt mittels des Verfahrens nach mindestens einem der vorgenannten Ansprüche.

9. Verbundwerkstoff nach Anspruch 8, wobei das SSBR mindestens eine funktionelle Gruppe aufweist.

10. Kautschukzusammensetzung, welche den Verbundwerkstoff nach Anspruch 8 oder 9 enthält.

11. Kautschukzusammensetzung nach Anspruch 10, weiter ein Additiv enthaltend, das aus mindestens einem von Triglyceridöl und mineralölbasiertem Öl besteht.

12. Kautschukzusammensetzung nach Ansprüchen 10 oder 11, umfassend, auf Basis von Gewichtsteilen je 100 Gewichtsteile Kautschuk (ThK):
(A) Elastomere auf Basis konjugierten Diens, umfassend:
(1) 70 bis 100 ThK Triglyceridöl-gestreckten SSBR-Verbundwerkstoff nach Anspruch 8 oder 9, und entsprechend
(2) Null bis 30 ThK mindestens eines zusätzlichen Elastomers, umfassend mindestens eines von Polymeren von mindestens einem von Isopren und 1,3-Butadien und Copolymeren von Styrol und mindestens einem von Isopren und 1,3-Butadien;
(B) 40 bis 110 ThK eines Verstärkungsfüllstoffs, umfassend:
(1) Silika, wie etwa amorphes synthetisches Silika oder ausgefälltes Silika, oder
(2) ein Kautschukverstärkungs-Carbon Black, oder
(3) eine Kombination von Silika und einem Kautschukverstärkungs-Carbon Black; und
(C) optional ein Silikakopplungsmittel für das Silika, wobei der Verstärkungsfüllstoff Silika enthält, wobei das Silikakopplungsmittel einen Anteil, der mit Hydroxylgruppen an dem Silika reaktiv ist, und einen anderen, verschiedenen Anteil, der mit Kohlenstoff-KohlenstoffDoppelbindungen der Elastomere auf Basis konjugierten Diens in Wechselwirkung tritt, aufweist.

13. Fertigungsgegenstand mit einem Bauteil, welches die Kautschukzusammensetzung nach Anspruch 10, 11 oder 12 umfasst.

14. Fertigungsgegenstand nach Anspruch 12, wobei der Fertigungsgegenstand ein Reifen ist.

15. Fertigungsgegenstand nach Anspruch 14, wobei der Verstärkungsfüllstoff eine Kombination von Kautschukverstärkungs-Carbon Black und ausgefälltem Silika ist, die 55 bis 90 Gewichtsprozent besagten ausgefällten Silikas enthält, oder wobei der Verstärkungsfüllstoff eine Kombination von Kautschukverstärkungs-Carbon Black und ausgefälltem Silika ist, die 20 bis 45 Gewichtsprozent an besagtem ausgefällten Silika enthält.

## Revendications

1. Procédé de préparation d'un élastomère de styrène/butadiène que l'on prépare via une polymérisation en solution organique allongée avec un triglycéride, le procédé comprenant, en se basant sur des parties en poids par 100 parties en poids élastomère (phr) :
(A) déclencher par voie anionique une polymérisation de monomères comprenant du styrène et du 1,3-butadiène dans une solution contenant un solvant organique pour obtenir un élastomère synthétique de styrène/butadiène SSBR contenu dans un ciment comprenant ledit SSBR et le solvant ;
(B) mettre un terme à ladite polymérisation desdits monomères dans ledit ciment ;
(C) mélanger intimement de 5 à 60, en variante de 10 à 40 phr d'au moins une huile végétale de triglycéride ; et
(D) récupérer ledit SSBR sous la forme d'un composite dudit SSBR et dudit triglycéride.

2. Procédé selon la revendication 1, dans lequel ladite huile végétale de triglycéride comprend au moins une huile choisie parmi le groupe comprenant de l'huile de soja, de l'huile de tournesol, de l'huile de canola (huile de colza), de l'huile de maïs, de l'huile de noix de coco, de l'huile de semences de coton, de l'huile d'olive, de l'huile de palme, de l'huile d'arachide et de l'huile de carthame ; et/ou dans lequel ledit élastomère de styrène/butadiène préparé par polymérisation en solution organique ne contient de préférence pas de l'huile de pétrole.

3. Procédé selon la revendication 1 ou 2, dans lequel ledit SSBR possède une viscosité de Mooney (à 23 °C) dans la plage de 50 à 180.

4. Procédé selon la revendication 3, dans lequel ledit SSBR possède une viscosité de Mooney (à 23 °C) dans la plage de 80 à 120.

5. Procédé selon au moins une des revendications précédentes, dans lequel ledit SSBR est un SSBR couplé à l'étain ou au silicium.

6. Procédé selon au moins une des revendications précédentes, dans lequel ledit SSBR est un SSBR fonctionnalisé contenant au moins un groupe fonctionnel comprenant au moins un groupe choisi parmi le groupe comprenant un groupe amine, un groupe siloxy, un groupe carboxyle et un groupe hydroxyle.

7. Procédé selon au moins une des revendications précédentes, dans lequel ledit SSBR est le produit d'une polymérisation à déclenchement anionique du styrène et du 1,3-butadiène, dans laquelle on utilise du n-butyllithium comme initiateur en présence d'un solvant inerte.

8. Composite d'un SSBR contenant un triglycéride, que l'on prépare via le procédé selon au moins une des revendications précédentes.

9. Composite selon la revendication 8, dans lequel le SSBR possède au moins un groupe fonctionnel.

10. Composition de caoutchouc contenant le composite selon la revendication 8 ou 9.

11. Composition de caoutchouc selon la revendication 10, comprenant en outre un additif comprenant au moins un membre choisi parmi le groupe comprenant une huile de triglycéride et une huile à base de pétrole.

12. Composition de caoutchouc selon la revendication 10 ou 11, comprenant, sur base de parties en poids par 100 parties en poids de caoutchouc (phr) :
(A) des élastomères à base de diènes conjugués, comprenant :
(1) à concurrence de 70 à 100 phr, un composite de SSBR allongé avec une huile de triglycéride, selon la revendication 8 ou 9, et de manière correspondante
(2) à concurrence de 0 à 30 phr, au moins un élastomère supplémentaire comprenant au moins un polymère ou un copolymère choisi parmi le groupe comprenant des polymères d'au moins un membre choisi parmi le groupe comprenant l'isoprène et le 1,3-butadiène et des copolymères de styrène et d'au moins un membre choisi parmi le groupe comprenant l'isoprène et le 1,3-butadiène ;
(B) à concurrence de 40 à 110 phr, une matière de charge pour le renforcement, comprenant :
(1) de la silice telle que de la silice synthétique amorphe ou de la silice précipitée ; ou
(2) un noir de carbone pour le renforcement du caoutchouc ; ou
(3) une combinaison de silice et d'un noir de carbone pour le renforcement du caoutchouc ; et
(C) de manière facultative, un agent de couplage de la silice pour ladite silice, lorsque ladite matière de charge pour le renforcement contient de la silice, l'agent de couplage pour la silice possédant une fractions aptes à réagir avec les groupes hydroxyle sur ladite silice et une autre fraction différente qui entre en interaction avec les doubles liaisons carbone-carbone desdits élastomères à base de diènes conjugués.

13. Article de fabrication possédant un composant comprenant la composition de caoutchouc selon le revendication 10, 11 ou 12.

14. Article de fabrication selon la revendication 12, dans lequel l'article de fabrication est un bandage pneumatique.

15. Article de fabrication selon la revendication 14, dans lequel ladite matière de charge pour le renforcement est une combinaison d'un noir de carbone pour le renforcement du caoutchouc et d'une silice précipitée contenant de 55 à 90 % en poids de ladite silice précipitée, ou dans lequel ladite matière de charge pour le renforcement est une combinaison d'un noir de carbone pour le renforcement du caoutchouc et d'une silice précipitée contenant de 20 à 45 % en poids de ladite silice précipitée.
